# EUROPEAN PATENT SPECIFICATION

(11) **EP 4 491 479 B1**
(45) Date of publication and mention of the grant of the patent: **29.04.2026**
(21) Application number: 23765903.2
(22) Date of filing: 03.03.2023
(51) Int. Cl.: B60W 50/02, B60W 50/00, B60L 3/00, G06F 11/30, G06F 11/34

(54) **VEHICLE EARLY WARNING METHOD AND APPARATUS, ELECTRONIC DEVICE, AND STORAGE MEDIUM**
VERFAHREN UND VORRICHTUNG ZUR FAHRZEUGFRÜHWARNUNG, ELEKTRONISCHE VORRICHTUNG UND SPEICHERMEDIUM
PROCÉDÉ ET APPAREIL D'AVERTISSEMENT PRÉCOCE DE VÉHICULE, DISPOSITIF ÉLECTRONIQUE ET SUPPORT DE STOCKAGE

(30) Priority: 07.03.2022 CN 202210225355
(43) Date of publication of application: 15.01.2025
(73) Proprietor: Great Wall Motor Company Limited, Baoding, Hebei 071000 (CN)
(72) Inventor: ZHANG, Yuanyuan, Baoding, Hebei 071000 (CN); HAO, Hongwei, Baoding, Hebei 071000 (CN); GAO, Xiaoju, Baoding, Hebei 071000 (CN); WANG, Yang, Baoding, Hebei 071000 (CN)
(74) Representative: Klunker IP Patentanwälte PartG mbB
(86) International application number: PCT/CN2023/079541
(87) International publication number: WO 2023/169325

(56) References cited:
- WO-A1-2020/106201
- CN-A- 108 983 758
- CN-A- 110 213 258
- CN-A- 115 230 723
- CN-A- 115 230 723
- KR-A- 20140 128 090
- US-A1- 2010 023 207
- US-A1- 2013 346 441

## Description

### TECHNICAL FIELD

The of the present invention relate to the technical field of vehicles, and particularly relate to a vehicle early-warning method and a corresponding electronic device, a storage medium, and a computer program product.

### BACKGROUND

Because of the strong government support on the development of new-energy vehicles, and the excellent performances of the new-energy vehicles themselves such as environment protection and energy saving, the market share of the new-energy vehicles is gradually increasing. However, because the techniques of the new-energy vehicles are not mature yet, there is a large problem in the battery safety.

When some of the components of the vehicle have a problem, that causes that some of the functions of the vehicle fail, which results in traffic accidents.

For example, the vehicle has a CPLD (Complex Programmable Logic Device) chip, wherein the CPLD chip is a diagnosing chip serving for diagnosing faults in the voltage, the current and the driving. When the CPLD chip in the vehicle has a driving fault or a state fault, the vehicle loses the propulsion power, and can merely slide forwardly through the inertia of the vehicle, which easily results in traffic accidents.

US 2010/0023207 A1 as the closest prior art discloses a vehicle information recording system comprising an abnormality detecting unit for identifying abnormal events, a vehicle state determination unit for determining a vehicle state - including at least one of a running state or running environment - based on a sensor output and threshold, and a memory unit for recording the vehicle state when the abnormal event occurs, along with the duration from when the sensor output exceeds the threshold to the event detection. The system may also record the vehicle state prior to threshold exceedance, the duration while the threshold is exceeded, and a cumulative duration of threshold exceedance. Additionally, it may store the number of times the output exceeds the threshold, the number of trips during which the threshold is exceeded, the number of trips with abnormal events, and a corresponding abnormal code such as a diagnostic trouble code. This recorded information facilitates estimation of the cause of the abnormal event.

### SUMMARY

It is an object of the present invention to provide a vehicle early-warning method and corresponding electronic device, a storage medium, and a computer program product, which aims at performing early warning in advance to the component fault in the vehicle, to reduce the probability of traffic accidents.

The object is achieved by the features of independent claim 1 regarding the vehicle early-warning method, of independent claim 6 regarding the corresponding electronic device, of independent claim 7 regarding the storage medium, of independent claim 8 regarding the computer program product.

The vehicle early-warning method according to the present invention can, if the number of times with which the first preset MCU fault code appears in the target temporal travel data segments is greater than the preset number of times, determine that a component of the current vehicle has a fault, and accordingly output the early-warning signal, thereby informing the user in advance that the component of the current vehicle has a fault. The user, when knowing the early-warning signal, can repair the current vehicle, thereby reducing traffic accidents. For example, when the CPLD chip in the vehicle has a fault, the early-warning signal is outputted, to inform the user that the CPLD has a driving fault, and the vehicle has the risk in losing the propulsion power. The user, when knowing that the vehicle has the risk in losing the propulsion power, can repair the vehicle timely.

Furthermore, because the vehicles in the market that have the components such as a chip have a high quantity, if the early warning is performed by artificial monitoring on chip faults, undoubtedly that increases the labor cost. The present invention can, when it is detected that the number of times with which the first preset MCU fault code appears in the target temporal travel data segments is greater than the preset number of times, automatically determine the component fault of the current vehicle and perform early warning, without early warning performed by artificial monitoring, which greatly reduces the labor cost.

In addition, the present invention can perform travel division to the vehicle-relevant data of the current vehicle, to divide it into a plurality of temporal travel data segments, and subsequently parallelly process each of the temporal travel data segments, to simultaneously determine the target temporal travel data segments from each of the temporal travel data segments, so as to determine whether the components of the current vehicle have a fault, and finally perform the early warning. Such a mode of parallelly processing each of the temporal travel data segments can quickly output the early-warning signal, thereby increasing the early-warning speed.

The above description is merely a summary of the technical solutions of the present invention. In order to more clearly know the elements of the present invention to enable the implementation according to the contents of the description, and in order to make the above and other purposes, features and advantages of the present invention more apparent and understandable, the detailed description of the present invention is provided below.

### BRIEF DESCRIPTION OF THE DRAWINGS

In order to more clearly illustrate the technical solutions of the present invention, the figures that are required to describe the present invention will be briefly described below.
FIG. 1 is a flow chart of the steps of a vehicle early-warning method;
FIG. 2 is a schematic diagram of an MCU-fault-signal curve;

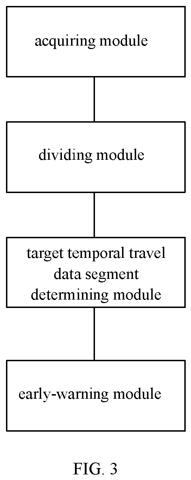

FIG. 3 is a structural block diagram of a vehicle early-warning apparatus;
FIG. 4 schematically shows a block diagram of an electronic device for implementing the method; and
FIG. 5 schematically shows a storage unit for maintaining or carrying a program code for implementing the method.

### DETAILED DESCRIPTION

The technical solutions of the of the present invention will be clearly and completely described below with reference to the drawings.

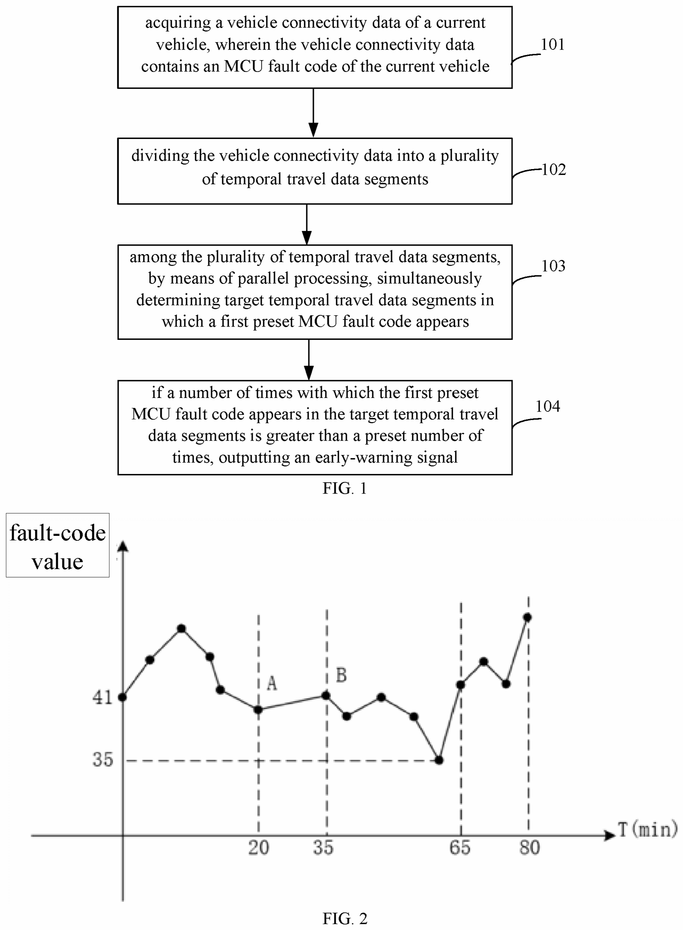

Referring to FIG. 1, the present invention provides a vehicle early-warning method. The method may be applied in an early-warning model, and may perform early warning for the components of a vehicle. For example, it may perform early warning in advance for driving faults of the CPLD chip of the vehicle, and may also perform early warning in advance for under-voltage of the storage battery of the vehicle. The method particularly comprises the following steps:
Step 101: acquiring a vehicle connectivity data of a current vehicle, wherein the vehicle connectivity data contains an MCU fault code of the current vehicle.

The vehicle connectivity data is established by associating a vehicle connectivity data table and a vehicle-information table. The vehicle connectivity data table shows the vehicle data relevant to the state of the current vehicle that are uploaded via CAN signals. The vehicle information is for indicating the type of the vehicle, for example, whether the vehicle is the Shanghai driving type or the Honeycomb driving type, wherein the Shanghai driving refers to the fuel-cell electrically driven vehicles, the purely electrically driven sedans, and so on, that are produced by the Shanghai Electric Drive company, and the Honeycomb driving refers to the fuel-cell electrically driven vehicles, the purely electrically driven sedans, and so on, that are produced by the Honeycomb electric driving company. Accordingly, the integrated vehicle connectivity data does not only contain the vehicle data relevant to the current vehicle, but also contains the vehicle type of the vehicle.

**Table 1**

| Id | Signal name | English name | Note |
|---|---|---|---|
| 1 | vin | Chassis number | |
| 2 | tid | Time | |
| 3 | TM_Failcode | MCU fault signal | |
| 4 | dt | Date | |
| 5 | source | Type of the data source | The values are 2 and 10 |
| 6 | engine_no | Electric-motor number | For matching with the corresponding electric driving |
| 7 | sale_status | sale status | 6 represents "truly sold" |

Specifically, the chassis number, the real-time date of registration of the datum, the standard date of registration of the datum, MCU (Microcontroller Unit) fault code, and type of data source related to the current vehicle are acquired from the vehicle connectivity data table. The electric-motor number and sales status related to the current vehicle are acquired from the vehicle-information table. And finally, they are integrated to form the vehicle connectivity data shown in Table 1.

**Table 2**

| Signal value | Meaning of fault |
|---|---|
| 35 | State fault code of the CPLD |
| 39 | CPLD driving fault |
| 40 | Overcurrent fault |
| 41 | Overvoltage fault |
| 45 and 127 | Fault of under-voltage of the storage battery |

Each vehicle corresponds to its unique chassis number, wherein the chassis number is used to uniquely identify one current vehicle. The standard date of registration of the datum refers to the accurate date of registration when the data source is registered and enters the vehicle connectivity data table. The real-time date of registration of the datum refers to the date of registration when the data source is registered and enters the vehicle connectivity data table currently. Referring to Table 2, if the MCU fault code is 35, that indicates a state fault of the CPLD. If the MCU fault code is 39, that indicates a driving fault of the CPLD. If the MCU fault code is 40, that indicates that the MCU has an overcurrent fault. If the MCU fault code is 41, that indicates that the MCU has an overvoltage fault. If the MCU fault code is 45 or 127, that indicates a fault of under-voltage of the storage battery of the MCU. The type of data source refers to that the data in the vehicle connectivity data table are the data when the current vehicle is in different travelling states, for example, the data when the vehicle is in the stages such as a registration state (the state when the starting-up has just begun), a heartbeat state (the state of stable travelling) and a shutting-down state.

The electric-motor number is used to identify the vehicle type of the vehicle, for example, to identify whether the vehicle is the Shanghai driving type or the Honeycomb driving type. The sale status is used to indicate the actual quantity of sale of the current vehicle.

Step 102: dividing the vehicle connectivity data into a plurality of temporal travel data segments.

During the travelling of the current vehicle, each of the data in the vehicle connectivity data is a datum that varies in a curve. For example, referring to FIG. 2, the plurality of black dots are used to identify multiple MCU fault codes, and the multiple MCU fault codes in the vehicle connectivity data vary in a curve and are consecutive. Moreover, because, within one day of the usage of the current vehicle, there are long durations of travelling and long durations of shutting-down, it is required to perform travel division to the vehicle connectivity data, to divide the vehicle connectivity data into a plurality of temporal travel data segments.

Each of the temporal travel data segments is the data that are generated when the current vehicle travels within different time periods, and the intervals between the temporal travel data segments are the intervals that are generated when the vehicle is shut down within different time periods.

Particularly, a consecutive MCU-fault-signal curve in the vehicle connectivity data is divided into a plurality of temporal travel data segments, wherein the interval durations between the temporal travel data segments are not less than a preset duration. The preset duration may be 15min, and may also be 20min, which is set according to particular practical situations, and is not limited in the present invention. The black dots in the MCU-fault-signal curve represent different signal values, and, if the signal value is 35 or 39, that indicates that the CPLD has a driving fault.

For example, referring to FIG. 2, the interval duration between the tail MCU fault code A of the first temporal travel data segment and the initial MCU fault code B of the second temporal travel data segment is 15min, and 15min is exactly equal to the preset duration, and thus is not less than the preset duration. Therefore, at the stage of 20min to 35min the current vehicle is in the shutting-down state, in which case the curve before the shutting-down stage may be divided to be one temporal travel data segment, and the curve after the shutting-down stage may be divided to be one temporal travel data segment. All of the subsequent temporal travel data segments are judged by following that logic, and finally the one consecutive MCU-fault-signal curve is divided into a plurality of temporal travel data segments.

Because the vehicle might be used frequently by the user within one day (or within week or within one month), and the vehicle generates a large data volume each time it is used, if all of the data of the vehicle undergo data processing one by one, or, in other words, the number of times with which the MCU fault code is the first preset MCU fault code is counted up one by one, undoubtedly finally the early-warning signal has a low speed.

In order to increase the early-warning speed, the present invention performs travel division to the data generated by the current vehicle within one day, to divide it into a plurality of temporal travel data segments, and subsequently parallelly process each of the temporal travel data segments. In other words, by parallel processing, the temporal travel data segments are synchronously processed by using the steps 103 and 104, and it is not required to, by serial processing, process the MCU fault codes generated by the current vehicle one by one. Therefore, it can be quickly determined whether the components of the current vehicle have a fault, to quickly perform early warning.

Step 103: among the plurality of temporal travel data segments, by means of parallel processing, simultaneously determining target temporal travel data segments in which the first preset MCU fault code appears.

In the present application, the first preset MCU fault code may be a fault code for characterizing that the CPLD chip of the vehicle has a fault, and may also be used to characterize a fault of under-voltage of the storage battery of the vehicle, and so on. The first preset MCU fault code according to the present invention is decided according to practical situations.

For example, the first preset fault code may be 35 or 39, and the first preset fault code is used to characterize that the CPLD of the current vehicle has a driving fault or a state fault. Among the plurality of temporal travel data segments that are obtained by the division, a plurality of temporal travel data segments in which the MCU fault code appears as 35 or 39 may be used as a plurality of target temporal travel data segments.

Referring to the two temporal travel data segments shown in FIG. 2 (the curve before the point A is the first temporal travel data segment, and the curve after the point B is the second temporal travel data segment), in the second temporal travel data segment the first preset fault code 35 appears, and therefore the second temporal travel data segment may be used as the target temporal travel data segment. The rest may be done in the same manner, and finally the plurality of target temporal travel data segments in which 35 or 39 appears in the one complete MCU-fault-signal curve are counted up.

Step 104: if a number of times with which the first preset MCU fault code appears in the target temporal travel data segments is greater than a preset number of times, outputting an early-warning signal.

In the present application, if the number of times with which the first preset MCU fault code appears in the target temporal travel data segments is greater than the preset number of times, that characterizes that a component of the current vehicle has a fault, and, therefore, the early-warning signal may be outputted, to perform early warning in advance.

For example, if the number of times with which 35 or 39 appears in the plurality of target temporal travel data segments is greater than the preset number of times, that indicates that the vehicle has a condition such as a CPLD driving fault or a CPLD state fault. Therefore, the early-warning signal is outputted, to notify the user that the vehicle might lose the propulsion power, to perform early warning in advance.

As another example, if the number of times with which 48 and 127 appear in the plurality of target temporal travel data segments is greater than the preset number of times, that indicates that the storage battery of the vehicle has under-voltage. Therefore, the early-warning signal is outputted, to notify the user that the capacity of electric-power supplying of the vehicle is insufficient, so as to charge in advance.

Particularly, after the plurality of target temporal travel data segments are determined, the process may comprise simultaneously counting up the number of times with which the first preset MCU fault code appears in each of the plurality of target temporal travel data segments, subsequently comparing the time quantities with which the first preset MCU fault code appears in each of the target temporal travel data segments with each other, and comparing the number of times of the highest numerical value with the preset number of times. If the number of times of the highest numerical value is less than or equal to the preset number of times, that indicates that the determination on the component fault of the current vehicle might have erroneous determination, and in this case the early-warning signal may not be outputted. If the number of times of the highest numerical value is greater than the preset number of times, it can be accurately determined that a component of the vehicle has a driving fault, and in this case the early-warning signal may be outputted, to perform early warning in advance for the fault situation of the components of the current vehicle.

The preset number of times may be 2, and may also be 3, which is set according to particular situations of the vehicle, and is not limited in the present application.

The steps 101 to 104 will be illustrated by using the following example, wherein the preset number of times is 2 times. The user uses the current vehicle at the stage of 8:00-8:30 in the morning, uses the current vehicle at 12:00-13:00 at noon, and uses the current vehicle at 6:00-6:50 in the evening. The current vehicle generates consecutive vehicle connectivity data within the duration of one day, and, via the travel division, the vehicle connectivity data is divided into three temporal travel data segments of morning, noon and evening.

By monitoring, it is determined that the first preset MCU fault code appears in all of the three temporal travel data segments of morning, noon and evening. Therefore, all of the three temporal travel data segments of morning, noon and evening are determined to be the target temporal travel data segments.

Subsequently, it is determined that the time quantities with which the first preset MCU fault code appears in the three temporal travel data segments of morning, noon and evening are 1, 2 and 3 respectively. Subsequently, 3, which is the highest numerical value, is compared with the preset number of times. Because 3 is greater than the preset number of times 2, it is determined that a component of the current vehicle has a fault, and in this case the early-warning signal may be outputted, to perform early warning in advance for the fault of the components of the current vehicle.

For example, taking the case as an example in which the component is the CPLD chip, by monitoring, it is determined that the fault code of 35 or 39 appears in all of the three temporal travel data segments of morning, noon and evening. Therefore, all of the three temporal travel data segments of morning, noon and evening are determined to be the target temporal travel data segments. Subsequently, it is determined that the time quantities with which 35 or 39 appears in the three temporal travel data segments of morning, noon and evening are 1, 2 and 3 respectively. Subsequently, 3, which is the highest numerical value, is compared with the preset number of times. Because 3 is greater than the preset number of times 2, it is determined that the CPLD of the current vehicle has a fault, and in this case the early-warning signal may be outputted, to notify the user that the vehicle might have the risk in losing the propulsion power. The user, when knowing the risk, can repair the vehicle timely.

For example, taking the case as an example in which the component is the storage battery, by monitoring, it is determined that the fault code of 45 or 127 appears in all of the three temporal travel data segments of morning, noon and evening. Therefore, all of the three temporal travel data segments of morning, noon and evening are determined to be the target temporal travel data segments. Subsequently, it is determined that the time quantities with which 45 or 127 appears in the three temporal travel data segments of morning, noon and evening are 1, 2 and 3 respectively. Subsequently, 3, which is the highest numerical value, is compared with the preset number of times. Because 3 is greater than the preset number of times 2, it is determined that the storage battery of the current vehicle has under-voltage, and in this case the early-warning signal may be outputted, to notify the user that the electric quantity of the storage battery of the vehicle is insufficient. The user, when knowing the risk, can charge the vehicle timely.

The vehicle early-warning method according to the present invention can, if the number of times with which the first preset MCU fault code appears in the target temporal travel data segments is greater than the preset number of times, determine that a component of the current vehicle has a fault, and accordingly output the early-warning signal, thereby informing the user in advance that the component of the current vehicle has a fault. The user, when knowing the early-warning signal, can repair the current vehicle, thereby reducing traffic accidents.

Furthermore, because the vehicles in the market that have the components such as a chip have a high quantity, if the early warning is performed by artificial monitoring on chip faults, undoubtedly that increases the labor cost. The present invention can, when it is detected that the number of times with which the first preset MCU fault code appears in the target temporal travel data segments is greater than the preset number of times, automatically determine the component fault of the current vehicle and perform early warning, without early warning performed by artificial monitoring, which greatly reduces the labor cost.

In addition, the present invention can perform travel division to the vehicle-relevant data of the current vehicle, to divide it into a plurality of temporal travel data segments, and subsequently parallelly process each of the temporal travel data segments, to simultaneously determine the target temporal travel data segments from each of the temporal travel data segments, so as to determine whether the components of the current vehicle have a fault, and finally perform the early warning. Such a mode of parallelly processing each of the temporal travel data segments can quickly output the early-warning signal, thereby increasing the early-warning speed.

Step 102 comprises the following steps:
Step 201: by using an early-warning model that is trained, identifying a plurality of driving-fault signal values in the vehicle connectivity data.

This step may comprise, based on vehicle-relevant data of a plurality of vehicles and a plurality of temporal travel data segments corresponding thereto, training a model, to obtain the early-warning model.

Particularly, the model may be trained by using the consecutive vehicle connectivity data as the input of the model and using the plurality of temporal travel data segments as the output of the model, so as to obtain the early-warning model. The obtained early-warning model has the capacity of performing travel division to one consecutive vehicle connectivity data.

Before the training of the model, it is further required to perform cleaning of abnormal data to the vehicle connectivity data inputted into the model, whereby all of the data inputted into the model are accurate valid data that the model can identify.

Particularly, the process may comprise cleaning abnormal data among the vehicle-relevant data of the plurality of vehicles, to obtain the vehicle-relevant data that are cleaned; and based on the vehicle-relevant data that are cleaned and a plurality of temporal travel data segments corresponding thereto, training the model, to obtain the early-warning model.

Referring to Table 1, the abnormal data include a real-time date of registration of a datum (tid) that is inconsistent with the standard date of registration of the datum (dt), and an inaccurate invalid datum uploaded to the vehicle data. The invalid datum refers to that, if, when the datum of a current moment is to be uploaded, the datum of the preceding moment is erroneously uploaded into the vehicle connectivity data, then the datum of the preceding moment is an invalid datum.

Before the vehicle connectivity data is inputted into the model, that part of abnormal data may be screened out, whereby all of the data inputted into the model are accurate and valid.

In addition, when the vehicle connectivity data is being inputted into the model, the uploading frequencies of the data of the fields might be unequal. For example, a field A is uploaded one time every 1s, while a field B is uploaded one time every 10s. However, when the vehicle connectivity data is being uploaded, at each moment it is required to correspondingly upload both of the field A and the field B. Because the field B has a lower uploading frequency, it is required to compensate for the datum missing from the field B, and upload the field B that is compensated for. That ensures that the data have correspondence therebetween, so that at each moment the data of different fields are uploaded, whereby finally each of the vehicle-relevant data that are outputted, at the same moment, has its respective corresponding data.

Step 202: determining an abnormal value in the plurality of MCU fault codes.

In this step, when travel division is performed to one consecutive MCU-fault-signal curve, the division may be based on an abnormal value among the plurality of MCU fault codes, wherein the plurality of MCU fault codes before the abnormal value are used as one temporal travel data segment, and the plurality of MCU fault codes after the abnormal value are used as another one temporal travel data segment. The rest may be done in the same manner, whereby the one consecutive MCU-fault-signal curve can be divided into a plurality of temporal travel data segments.

Particularly, this step may comprise the following sub-steps:
Sub-step A1: calculating an interval duration between each two successive MCU fault codes in the vehicle connectivity data.

Referring to the MCU-fault-signal curve formed by a plurality of MCU fault codes shown in FIG. 2, in this step, all of the interval durations between each two successive MCU fault codes are calculated. Accordingly, it can be determined which two MCU fault codes have an interval duration therebetween that exceeds the preset duration.

Particularly, the interval duration between two successive MCU fault codes may be obtained by subtracting the time stamp of the preceding one MCU fault code from the time stamp of the subsequent one MCU fault code.

Sub-step A2: if the interval duration is not less than a preset duration, using the MCU fault code that has a later time stamp among the two successive MCU fault codes as the abnormal value.

Referring to FIG. 2, among the plurality of MCU fault codes of the first temporal travel data segment and the second temporal travel data segment, all of the interval durations between each two successive MCU fault codes are less than 15min. Moreover, the interval duration between the tail MCU fault code A of the first temporal travel data segment and the initial MCU fault code B of the second temporal travel data segment is 15min, which is exactly not less than the preset duration 15min. Therefore, the initial MCU fault code B is used as an abnormal value.

Step 203: by using the abnormal value as a division point, dividing the vehicle connectivity data into the plurality of temporal travel data segments.

After the initial MCU fault code is determined as the abnormal value, the plurality of MCU fault codes before the abnormal value are used as one temporal travel data segment, and the abnormal value and the plurality of MCU fault codes after the abnormal value are used as another one temporal travel data segment. The rest may be done in the same manner, whereby the one consecutive MCU-fault-signal curve can be divided into a plurality of temporal travel data segments.

For example, taking the case as an example in which the initial MCU fault code of the second temporal travel data segment is used as the abnormal value, the plurality of MCU fault codes before the initial MCU fault code B are used as the first temporal travel data segment, and the initial MCU fault code B and the plurality of MCU fault codes after the initial MCU fault code B are used as the second temporal travel data segment. For the subsequent data whose time stamps are greater than that of the second temporal travel data segment, such a method may apply, to divide the one consecutive MCU-fault-signal curve into a plurality of temporal travel data segments.

Optionally, if the vehicle component that is early-warned is the CPLD chip, when it is detected that the plurality of temporal travel data segments have the fault of under-voltage of the storage battery, the vehicle also outputs the early-warning signal. However, the fault of under-voltage of the storage battery does not cause the vehicle to lose the propulsion power, and if the early-warning signal is outputted at this point, the user is misled to think that the vehicle has lost the propulsion power, which affects the effect of early warning.

Therefore, in the early warning of the faults of the CPLD chip, the fault of under-voltage of the storage battery results in misreporting of a CPLD fault. In order to screen out the fault of under-voltage of the storage battery, the step 103 further comprises the following steps:
Step 301: determining, among the plurality of temporal travel data segments, the invalid temporal travel data segments in which the MCU fault code appears as the second preset MCU fault code.

In this step, the second preset MCU fault code is used to characterize a fault of under-voltage of the storage battery. For example, when the second preset fault code of 45 or 127 appears in the temporal travel data segments, it is determined that the current temporal travel data segment is an invalid temporal travel data segment.

The invalid temporal travel data segments are temporal travel data segments in which the fault of under-voltage of the storage battery appears.

Step 302: removing the invalid temporal travel data segments from the plurality of temporal travel data segments, to obtain valid temporal travel data segments.

In this step, the invalid temporal travel data segments may be removed from the plurality of temporal travel data segments, to obtain the valid temporal travel data segments. The valid temporal travel data segments refer to the temporal travel data segments in which the first preset MCU fault code appears, or the temporal travel data segments in which the overcurrent fault appears, or the temporal travel data segments in which the overvoltage fault appears.

Because the invalid temporal travel data segments affect the effect of early warning, the invalid temporal travel data segments may be removed from the plurality of the temporal travel data segments, so as to ensure that the remaining valid temporal travel data segments do not include invalid temporal travel data segments that affect the effect of early warning, to ensure that what is early-warned in the present invention is the CPLD faults, thereby preventing erroneous early warning.

Step 303: from a plurality of valid temporal travel data segments, determining the target temporal travel data segments in which the MCU fault code appears as the first preset MCU fault code.

By using the vehicle early-warning method according to the present application, the target temporal travel data segments may be determined among the remaining valid temporal travel data segments. In an aspect, because the remaining valid temporal travel data segments do not include invalid temporal travel data segments that affect the effect of early warning, it is ensured that what is early-warned in the present invention is the CPLD faults, thereby preventing erroneous early warning. In another aspect, when the target temporal travel data segments are being determined from the plurality of valid temporal travel data segments, because the valid temporal travel data segments are screened, the data volume of the valid temporal travel data segments is highly reduced, and, when the target temporal travel data segments are determined from the valid temporal travel data segments of a lower data volume, the quantity of the processed data is highly reduced, which alleviates the computation load.

Optionally, when a developer has acquired the early-warning signal, as he knows merely the CPLD fault of the vehicle, but does not know the other type of the state information of the vehicle, he cannot, according to merely the CPLD fault of the vehicle, improve the current vehicle or notify the vehicle owner of the CPLD fault of the current vehicle. In order to facilitate the developer to be enable to accurately locate the current vehicle, and acquire the information of the current vehicle, the step 104 further comprises the following steps:

Step 401: if the number of times with which the first preset MCU fault code appears in the target temporal travel data segments is greater than the preset number of times, recording state information of the current vehicle, wherein the state information contains the chassis number, the number of times with which the first preset MCU fault code appears, the electric-motor number, and the driving type.

In this step, if, among the plurality of target temporal travel data segments, the highest number of times with which the first preset fault MCU code appears is greater than the preset number of times, the state information of the current vehicle is acquired from the vehicle connectivity data, and the state information is recorded.

For example, the time quantities with which the first preset MCU fault code appears in the three sections of temporal travel data segments of morning, noon and evening are 1, 2 and 3 respectively. Because the highest number of times 3 is greater than the preset number of times 2, in this case the state information of the current vehicle can be acquired from the vehicle connectivity data.

The chassis number of the vehicle is used to uniquely identify one current vehicle, and is used to facilitate the developer to uniquely identify one current vehicle from a plurality of vehicles. The number of times with which the first preset MCU fault code appears is used to facilitate the developer to determine the degree of the fault of the component of the current vehicle, wherein if the number of times with which the first preset MCU fault code appears is higher, the component of the current vehicle has a higher degree of the fault. The electric-motor number and the driving type are used to determine whether the current vehicle is the Shanghai driving type or the Honeycomb driving type, to facilitate the developer to reduce the range for searching for the current vehicle.

Step 402: if the state information is the same as a predetermined state information, outputting the early-warning signal.

The platform where the developer is located stores the predetermined state information of each of the vehicles. When a component of the current vehicle has a fault, the state information of the current vehicle is sent to the platform where the developer is located, and subsequently the platform verifies the state information of the current vehicle, and, if the verified state information is consistent with the predetermined state information, generates the early-warning signal for the current vehicle to push to the developer. Because the early-warning signal carries the state information of the current vehicle, the developer may, according to the state information of the current vehicle, determine which vehicle has a component that has a fault, and determine the degree of the severity of the component fault.

For example, if the electric-motor number, the chassis number and the driving type of the current vehicle correspond to the electric-motor number, the chassis number and the driving type of a certain vehicle in the platform one to one, then the early-warning signal of the current vehicle is outputted in the platform. The developer, when knowing the early-warning signal, may, according to the early-warning signal, notify the vehicle owner to repair or check the vehicle.

On the basis of the same concept, the present invention may further be implemented as a vehicle early-warning apparatus, wherein the apparatus comprises:
an acquiring module configured for acquiring a vehicle connectivity data of a current vehicle, wherein the vehicle connectivity data contains an MCU fault code of the current vehicle;
a dividing module configured for dividing the vehicle connectivity data into a plurality of temporal travel data segments;
a target-travel-datum determining module configured for, among the plurality of temporal travel data segments, by means of parallel processing, simultaneously determining target temporal travel data segments in which a first preset MCU fault code appears; and
an early-warning module configured for, if a number of times with which the first preset MCU fault code appears in the target temporal travel data segments is greater than a preset number of times, outputting an early-warning signal, wherein the early-warning signal is for indicating that the current vehicle has a driving fault.

Further, the dividing module comprises:
an acquiring submodule configured for, by using an early-warning model that is trained, identifying a plurality of MCU fault codes in the vehicle connectivity data;
an abnormal-value determining module configured for determining an abnormal value in the plurality of MCU fault codes; and
a dividing submodule configured for, by using the abnormal value as a division point, dividing the vehicle connectivity data into the plurality of temporal travel data segments.

Further, the abnormal-value determining module comprises:
an interval-duration calculating module configured for calculating an interval duration between each two successive MCU fault codes in the vehicle connectivity data; and
an abnormal-value determining submodule configured for, if the interval duration is not less than a preset duration, using the MCU fault code that has a later time stamp among the two successive MCU fault codes as the abnormal value.

Optionally, the target-travel-datum determining module comprises:
an invalid-travel-datum determining module configured for, among the plurality of temporal travel data segments, by means of parallel processing, simultaneously determining invalid temporal travel data segments in which a second preset MCU fault code appears;
a valid-travel-datum determining module configured for removing the invalid temporal travel data segments from the plurality of temporal travel data segments, to obtain valid temporal travel data segments; and
a target-travel-datum determining submodule configured for, from a plurality of valid temporal travel data segments, determining the target temporal travel data segments in which the first preset MCU fault code appears.

Optionally, the early-warning module comprises:
a recording module configured for, if the number of times with which the first preset MCU fault code appears in the target temporal travel data segments is greater than the preset number of times, recording state information of the current vehicle, wherein the state information contains a chassis number, a number of times with which a driving-fault signal value appears, an electric-motor number, and a driving type; and
an early-warning submodule configured for, if the state information is the same as a predetermined state information, outputting the early-warning signal.

Optionally, the apparatus further comprises:
a training module configured for, based on vehicle-relevant data of a plurality of vehicles and a plurality of temporal travel data segments corresponding thereto, training a model, to obtain the early-warning model.

Optionally, the training module comprises:
a cleaning module configured for cleaning abnormal data among the vehicle-relevant data of the plurality of vehicles, to obtain the vehicle-relevant data that are cleaned; and
a training submodule configured for, based on the vehicle-relevant data that are cleaned and a plurality of temporal travel data segments corresponding thereto, training the model, to obtain the early-warning model.

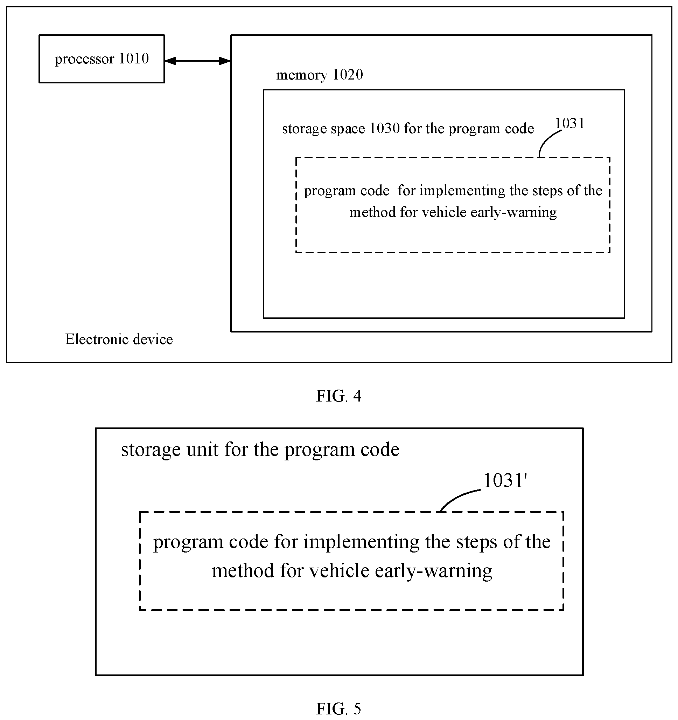

On the basis of the same inventive concept, the present invention further provides a corresponding electronic device. As shown in FIG. 4, the electronic device comprises:
one or more processors; and
one or more machine-readable media storing an instruction therein, wherein the instruction, when executed by the one or more processors, causes the electronic device to implement the vehicle early-warning method.

On the basis of the same concept, the present invention further provides one or more machine-readable storage media, wherein the machine-readable storage media have stored an instruction, and the instruction, when executed by one or more processors, causes the processor to implement the vehicle early-warning method.

On the basis of the same concept, the present invention further provides a computer program product. As shown in FIG. 5, the computer program product contains a computer-readable code, and the computer-readable code, when executing in an electronic device, causes the electronic device to implement the vehicle early-warning method.

Regarding the device , because it is substantially similar to the process , it is described simply, and the related parts may refer to the description on the process .

The invention is described in the mode of progression, each of the aspects emphatically describes the differences from the other aspects, and the same or similar parts of the aspects may refer to each other.

A person skilled in the art should understand that the present invention may be provided as a method, a device, or a computer program product. Therefore, the present invention may be implemented in the form of a complete hardware, a complete software, or combining software and hardware. Furthermore, the present invention may take the form of a computer program product implemented on one or more computer-usable storage media (including but not limited to a disk storage, a CD-ROM, an optical memory and so on) containing a computer-usable program code therein.

The present invention is described with reference to the flow charts and/or block diagrams of the method, the device, and the computer program product It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article comprising an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

For example, FIG. 4 shows an electronic device that can implement the method according to the present invention. The electronic device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 5. The storage unit may have storage segments or storage spaces with similar arrangement to the memory 1020 of the electronic device in FIG. 4. The program codes may, for example, be compressed in a suitable form. Generally, the storage unit contains a computer-readable code 1031', which can be read by a processor like 1010. When those codes are executed by the electronic device, the codes cause the electronic device to implement each of the steps of the method described above.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

## Claims

1. A vehicle early-warning method, the method comprises:
(S101) acquiring vehicle connectivity data of a current vehicle, wherein the vehicle connectivity data contains a microcontroller unit, MCU, fault code of the current vehicle;
(S102) dividing the vehicle connectivity data into a plurality of temporal travel data segments; **characterized by**
among the plurality of temporal travel data segments, by means of parallel processing, simultaneously determining target temporal travel data segments in which a first preset MCU fault code appears; and
outputting an early-warning signal, if a number of times with which the first preset MCU fault code appears in the target temporal travel data segments is greater than a preset number of times; and
wherein the step of dividing the vehicle connectivity data into the plurality of temporal travel data segments comprises:
by using a trained early-warning model, identifying a plurality of MCU fault codes in the vehicle connectivity data;
determining an abnormal value in the plurality of MCU fault codes by: calculating an interval duration between each two successive MCU fault codes in the vehicle connectivity data; and if the interval duration is not less than a preset duration, using the MCU fault code that has a later time stamp among the two successive MCU fault codes as the abnormal value; and
dividing the vehicle connectivity data into the plurality of temporal travel data segments, by using the abnormal value as a division point.

2. The method according to claim 1, wherein the step of, among the plurality of temporal travel data segments, by means of parallel processing, simultaneously determining the target temporal travel data segments in which the first preset MCU fault code appears comprises:
among the plurality of temporal travel data segments, by means of parallel processing, simultaneously determining invalid temporal travel data segments in which a second preset MCU fault code appears;
removing the invalid temporal travel data segments from the plurality of temporal travel data segments, to obtain valid temporal travel data segments; and
from a plurality of valid temporal travel data segments, determining the target temporal travel data segments in which the first preset MCU fault code appears.

3. The method according to claim 1, wherein the step of, if the number of times with which the first preset MCU fault code appears in the target temporal travel data segments is greater than the preset number of times, outputting the early-warning signal comprises:
if the number of times with which the first preset MCU fault code appears in the target temporal travel data segments is greater than the preset number of times, recording state information of the current vehicle, wherein the state information contains a chassis number, a number of times with which a driving-fault signal value appears, an electric-motor number, and a driving type; and
if the state information is the same as a predetermined state information, outputting the early-warning signal.

4. The method according to claim 1, wherein the early-warning model is obtained by training by:
based on vehicle connectivity data of a plurality of vehicles and a plurality of temporal travel data segments corresponding thereto, training a model, to obtain the early-warning model.

5. The method according to claim 4, wherein the step of, based on the vehicle connectivity data of the plurality of vehicles and the plurality of temporal travel data segments corresponding thereto, training the model comprises:
cleaning abnormal data among the vehicle connectivity data of the plurality of vehicles, to obtain the vehicle connectivity data that are cleaned; and
based on the vehicle connectivity data that are cleaned and a plurality of temporal travel data segments corresponding thereto, training the model, to obtain the early-warning model.

6. An electronic device, wherein the electronic device comprises:
one or more processors (1010); and
one or more machine-readable media (1020) storing an instruction (1031) therein, wherein the instruction (1031), when executed by the one or more processors (1010), causes the electronic device to implement the vehicle early-warning method according to any one of claims 1-5.

7. One or more machine-readable storage media, wherein the machine-readable storage media having stored an instruction, and the instruction, when executed by one or more processors, causes the one or more processors to implement the vehicle early-warning method according to any one of claims 1-5.

8. A computer program product, wherein the computer program product contains a computer-readable code, and the computer-readable code, when executed by an electronic device, causes the electronic device to implement the vehicle early-warning method according to any one of claims 1-5.

## Patentansprüche

1. Fahrzeugfrühwarnverfahren, wobei das Verfahren aufweist:
(S101) Erfassen von Fahrzeugkonnektivitätsdaten eines aktuellen Fahrzeugs, wobei die Fahrzeugkonnektivitätsdaten einen Mikrocontroller-, MCU-, Fehlercode des aktuellen Fahrzeugs enthalten;
(S102) Unterteilen der Fahrzeugkonnektivitätsdaten in eine Vielzahl von zeitlichen Fahrdatensegmenten; **dadurch gekennzeichnet, dass**
unter der Vielzahl von zeitlichen Fahrdatensegmenten mittels Parallelverarbeitung gleichzeitig zeitliche Ziel-Fahrdatensegmenten bestimmt werden, in denen ein erster voreingestellter MCU-Fehlercode erscheint; und
Ausgeben eines Frühwarnsignals, wenn eine Anzahl von Malen, mit denen der erste voreingestellte MCU-Fehlercode in den zeitlichen Ziel-Fahrdatensegmenten erscheint, größer als eine voreingestellte Anzahl ist; und
wobei der Schritt des Unterteilens der Fahrzeugkonnektivitätsdaten in die Vielzahl von zeitlichen Fahrdatensegmenten aufweist:
unter Verwendung eines trainierten Frühwarnmodells Identifizieren einer Vielzahl von MCU-Fehlercodes in den Fahrzeugkonnektivitätsdaten;
Bestimmen eines abnormalen Werts in der Vielzahl von MCU-Fehlercodes durch: Berechnen einer Intervallzeitdauer zwischen jeweils zwei aufeinanderfolgenden MCU-Fehlercodes in den Fahrzeugkonnektivitätsdaten; und wenn die Intervallzeitdauer nicht kleiner als eine voreingestellte Zeitdauer ist, Verwenden des MCU-Fehlercodes, der unter den zwei aufeinanderfolgenden MCU-Fehlercodes einen späteren Zeitstempel aufweist, als abnormalen Wert; und
Unterteilen der Fahrzeugkonnektivitätsdaten in die Vielzahl von zeitlichen Fahrdatensegmenten unter Verwendung des abnormalen Werts als Unterteilungspunkt.

2. Verfahren nach Anspruch 1, wobei der Schritt des unter der Vielzahl von zeitlichen Fahrdatensegmenten mittels Parallelverarbeitung gleichzeitigen Bestimmens der zeitlichen Ziel-Fahrdatensegmente, in denen der erste voreingestellte MCU-Fehlercode erscheint, aufweist:
unter der Vielzahl von zeitlichen Fahrdatensegmenten mittels Parallelverarbeitung gleichzeitig Bestimmen ungültiger zeitlicher Fahrdatensegmente, in denen ein zweiter voreingestellter MCU-Fehlercode erscheint;
Entfernen der ungültigen zeitlichen Fahrdatensegmente aus der Vielzahl von zeitlichen Fahrdatensegmenten, um gültige zeitliche Fahrdatensegmente zu erhalten; und
Bestimmen der zeitlichen Ziel-Fahrdatensegmente, in denen der erste voreingestellte MCU-Fehlercode erscheint, aus einer Vielzahl von gültigen zeitlichen Fahrdatensegmenten.

3. Verfahren nach Anspruch 1, wobei der Schritt des Ausgebens des Frühwarnsignals, wenn die Anzahl von Malen, mit denen der erste voreingestellte MCU-Fehlercode in den zeitlichen Ziel-Fahrdatensegmenten erscheint, größer als die voreingestellte Anzahl ist, aufweist:
wenn die Anzahl von Malen, mit denen der erste voreingestellte MCU-Fehlercode in den zeitlichen Ziel-Fahrdatensegmenten erscheint, größer als die voreingestellte Anzahl ist, Aufzeichnen von Zustandsinformation des aktuellen Fahrzeugs, wobei die Zustandsinformation eine Fahrgestellnummer, eine Anzahl von Malen, mit denen ein Fahrfehlersignalwert in den zeitlichen Ziel-Fahrdatensegmenten erscheint, eine Elektromotornummer und einen Fahrtyp enthält; und
wenn die Zustandsinformation mit einer vorbestimmten Zustandsinformation übereinstimmt, Ausgeben des Frühwarnsignals.

4. Verfahren nach Anspruch 1, wobei das Frühwarnmodell durch Trainieren erhalten wird durch:
Trainieren eines Modells auf der Grundlage von Fahrzeugkonnektivitätsdaten einer Vielzahl von Fahrzeugen und einer Vielzahl von diesen entsprechenden zeitlichen Fahrdatensegmenten, um das Frühwarnmodell zu erhalten.

5. Verfahren nach Anspruch 4, wobei der Schritt des Trainierens des Modells auf der Grundlage der Fahrzeugkonnektivitätsdaten der Vielzahl von Fahrzeugen und der Vielzahl von diesen entsprechenden zeitlichen Fahrdatensegmenten aufweist:
Bereinigen abnormaler Daten unter den Fahrzeugkonnektivitätsdaten der Vielzahl von Fahrzeugen, um bereinigte Fahrzeugkonnektivitätsdaten zu erhalten; und
Trainieren des Modells auf der Grundlage der bereinigten Fahrzeugkonnektivitätsdaten und einer Vielzahl von diesen entsprechenden zeitlichen Fahrdatensegmenten, um das Frühwarnmodell zu erhalten.

6. Elektronische Vorrichtung, wobei die elektronische Vorrichtung aufweist:
einen oder mehrere Prozessoren (1010); und
ein oder mehrere maschinenlesbare Medien (1020), die eine Anweisung (1031) darauf speichern, wobei die Anweisung (1031), wenn sie durch den einen oder die mehreren Prozessoren (1010) ausgeführt wird, die elektronische Vorrichtung veranlasst, das Fahrzeugfrühwarnverfahren nach einem der Ansprüche 1 bis 5 zu implementieren.

7. Ein oder mehrere maschinenlesbare Speichermedien, wobei die maschinenlesbaren Speichermedien eine darauf gespeicherte Anweisung aufweisen, und die Anweisung, wenn sie durch einen oder mehrere Prozessoren ausgeführt wird, den einen oder die mehreren Prozessoren veranlasst, das Fahrzeugfrühwarnverfahren nach einem der Ansprüche 1 bis 5 zu implementieren.

8. Computerprogrammprodukt, wobei das Computerprogrammprodukt einen computerlesbaren Code enthält, und der computerlesbare Code, wenn er durch eine elektronische Vorrichtung ausgeführt wird, die elektronische Vorrichtung veranlasst, das Fahrzeugfrühwarnverfahren nach einem der Ansprüche 1 bis 5 zu implementieren.

## Revendications

1. Procédé d'avertissement précoce de véhicule, le procédé comprenant :
(S101) l'acquisition de données de connectivité de véhicule d'un véhicule courant, dans lequel les données de connectivité de véhicule contiennent un code de panne d'unité de microcontrôleur, MCU, du véhicule courant ; et
(S102) la division des données de connectivité de véhicule selon une pluralité de segments temporels de données de déplacement ;
**caractérisé par** :
parmi la pluralité de segments temporels de données de déplacement, au moyen d'un traitement parallèle, la détermination simultanée de segments temporels de données de déplacement cibles dans lesquels un premier code de panne de MCU prédéfini apparaît ; et
l'émission en sortie d'un signal d'avertissement précoce si un nombre de fois selon lesquelles le premier code de panne de MCU prédéfini apparaît dans les segments temporels de données de déplacement cibles est supérieur à un nombre de fois prédéfini ; et
dans lequel l'étape de division des données de connectivité de véhicule selon la pluralité de segments temporels de données de déplacement comprend :
en utilisant un modèle d'avertissement précoce entraîné, l'identification d'une pluralité de codes de panne de MCU dans les données de connectivité de véhicule ;
la détermination d'une valeur anormale dans la pluralité de codes de panne de MCU en : calculant une durée d'intervalle entre tous les deux codes de panne de MCU successifs dans les données de connectivité de véhicule ; et si la durée d'intervalle n'est pas inférieure à une durée prédéfinie, l'utilisation du code de panne de MCU qui présente une estampille temporelle plus tardive parmi les deux codes de panne de MCU successifs en tant que valeur anormale ; et
la division des données de connectivité de véhicule selon la pluralité de segments temporels de données de déplacement, en utilisant la valeur anormale en tant que point de division.

2. Procédé selon la revendication 1, dans lequel l'étape consistant à, parmi la pluralité de segments temporels de données de déplacement, au moyen d'un traitement parallèle, déterminer simultanément les segments temporels de données de déplacement cibles dans lesquels le premier code de panne de MCU prédéfini apparaît comprend :
parmi la pluralité de segments temporels de données de déplacement, au moyen d'un traitement parallèle, la détermination simultanée de segments temporels de données de déplacement invalides dans lesquels un second code de panne de MCU prédéfini apparaît ;
la suppression des segments temporels de données de déplacement invalides de la pluralité de segments temporels de données de déplacement, afin d'obtenir des segments temporels de données de déplacement valides ; et
parmi une pluralité de segments temporels de données de déplacement valides, la détermination des segments temporels de données de déplacement cibles dans lesquels le premier code de panne de MCU prédéfini apparaît.

3. Procédé selon la revendication 1, dans lequel l'étape consistant à, si le nombre de fois selon lesquelles le premier code de panne de MCU prédéfini apparaît dans les segments temporels de données de déplacement cibles est supérieur au nombre de fois prédéfini, émettre en sortie le signal d'avertissement précoce comprend :
si le nombre de fois selon lesquelles le premier code de panne de MCU prédéfini apparaît dans les segments temporels de données de déplacement cibles est supérieur au nombre de fois prédéfini, l'enregistrement d'une information d'état du véhicule courant, dans lequel l'information d'état contient un numéro de châssis, un nombre de fois selon lesquelles une valeur de signal de panne de commande apparaît, un numéro de moteur électrique et un type de commande ; et
si l'information d'état est la même qu'une information d'état prédéterminée, l'émission en sortie du signal d'avertissement précoce.

4. Procédé selon la revendication 1, dans lequel le modèle d'avertissement précoce est obtenu par entraînement en :
sur la base de données de connectivité de véhicule d'une pluralité de véhicules et d'une pluralité de segments temporels de données de déplacement leur correspondant, entraînant un modèle, afin d'obtenir le modèle d'avertissement précoce.

5. Procédé selon la revendication 4, dans lequel l'étape consistant à, sur la base des données de connectivité de véhicule de la pluralité de véhicules et de la pluralité de segments temporels de données de déplacement leur correspondant, entraîner le modèle comprend :
le nettoyage de données anormales parmi les données de connectivité de véhicule de la pluralité de véhicules, afin d'obtenir les données de connectivité de véhicule qui sont nettoyées ; et
sur la base des données de connectivité de véhicule qui sont nettoyées et d'une pluralité de segments temporels de données de déplacement leur correspondant, l'entraînement du modèle, afin d'obtenir le modèle d'avertissement précoce.

6. Dispositif électronique, dans lequel le dispositif électronique comprend :
un ou plusieurs processeur(s) (1010) ; et
un ou plusieurs support(s) lisible(s) par machine (1020) qui stocke(nt) une instruction (1031) en son sein ou en leur sein, dans lequel l'instruction (1031), lorsqu'elle est exécutée par les un ou plusieurs processeurs (1010), force le dispositif électronique à mettre en œuvre le procédé d'avertissement précoce de véhicule selon l'une quelconque des revendications 1 à 5.

7. Un ou plusieurs support(s) de stockage lisible(s) par machine, dans lequel le ou les support(s) de stockage lisible(s) par machine comporte(nt) une instruction qui a été stockée en son sein ou en leur sein, et l'instruction, lorsqu'elle est exécutée par un ou plusieurs processeur(s), force les un ou plusieurs processeurs à mettre en œuvre le procédé d'avertissement précoce de véhicule selon l'une quelconque des revendications 1 à 5.

8. Produit de programme informatique, dans lequel le produit de programme informatique contient un code lisible par ordinateur, et le code lisible par ordinateur, lorsqu'il est exécuté par un dispositif électronique, force le dispositif électronique à mettre en œuvre le procédé d'avertissement précoce de véhicule selon l'une quelconque des revendications 1 à 5.
